(19) Europäisches Patentamt
European Patent Office
Office européen des brevets

(11) Publication number: **0 223 498**
**A2**

(12) # EUROPEAN PATENT APPLICATION

(21) Application number: 86308608.8

(22) Date of filing: 05.11.86

(51) Int. Cl.4: B65D 27/38 , B65D 75/58

(30) Priority: 06.11.85 US 795502

(43) Date of publication of application:
27.05.87 Bulletin 87/22

(84) Designated Contracting States:
BE DE FR GB IT

(71) Applicant: E.I. DU PONT DE NEMOURS AND COMPANY
1007 Market Street
Wilmington Delaware 19898(US)

(72) Inventor: Becker Jr., Hazen Russell
130 Round Hill Road
Kennett Square Pennsylvania 19348(US)

(74) Representative: Jones, Alan John et al
CARPMAELS & RANSFORD 43 Bloomsbury Square
London, WC1A 2RA(GB)

(54) **Opening device for shrinkable film packages.**

(57) Opening devices for shrinkable film packages comprise a tearstrip line imprinted on the inside surface of the film and an open-ended cut through the film substantially centered over the tearstrip line.

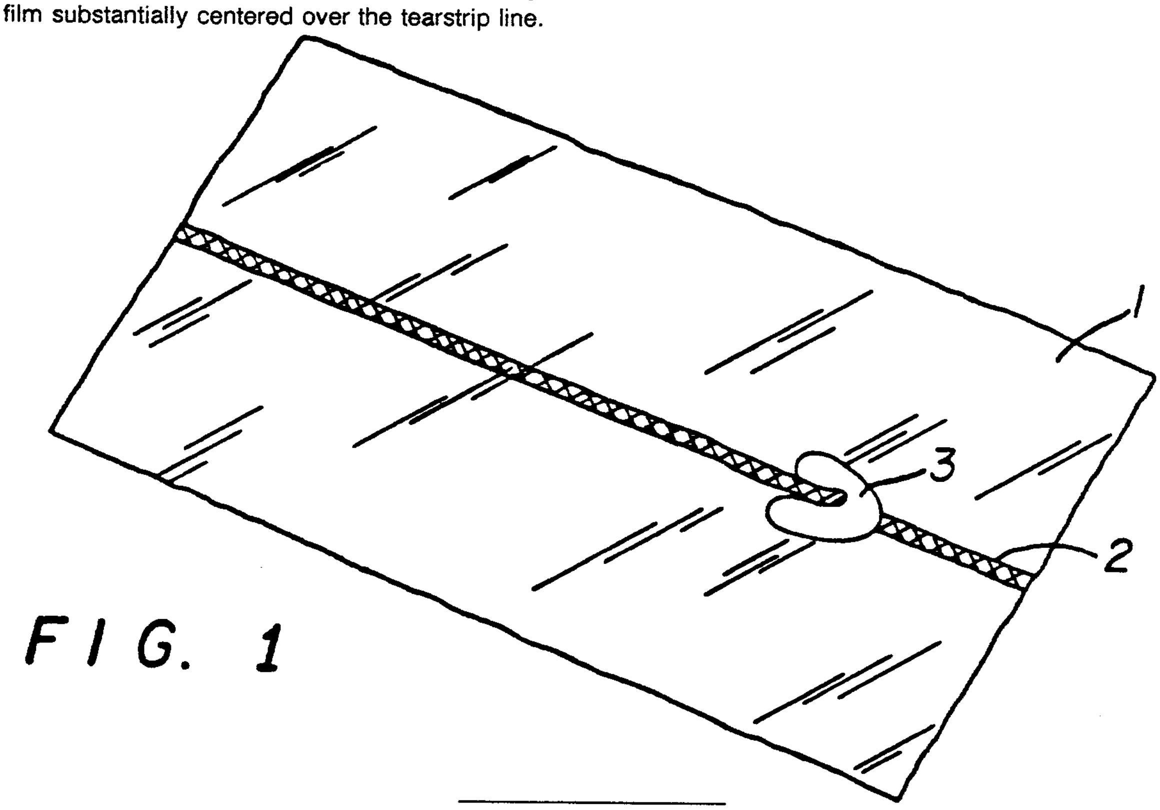


FIG. 1

EP 0 223 498 A2

# OPENING DEVICE FOR SHRINKABLE FILM PACKAGES

## BACKGROUND OF THE INVENTION

This invention relates to an opening device for articles wrapped in shrinkable thermoplastic films.

Interest in packages overwrapped with shrinkable films has grown rapidly, particularly with the advent of axially oriented films such as polyethylene, polypropylene, polyvinyl chloride, polyvinylidene chloride and other similar and equivalent biaxially oriented films. One of the outstanding features of shrinkable film overwrapping is the toughness of the package and its durability. While these physical characteristics are an asset in the handling and storage of the package, they also cause problems and difficulties in removal of the film to open the package.

One system proposed for providing easy-opening of a shrinkable film package is that disclosed in U.S. 3,403,840, issued on October 1, 1968. This invention involved lapping and sealing the longitudinal edges of the films to form a longitudinal seam and cutting the film transversely through that seam to form an opening tab. When pulled, the opening tab is said to cause tearing of the wrapper along the edges of the longitudinal seam.

U.S. 3,175,752, issued on March 30, 1965, discloses tearing means for film packages comprising a cut having spaced opposing ends in the film and a strip of pressure sensitive tape overlying the cut in the film. The cut, such as an open ended V or U shaped cut, provides a pair of initiated tears at the spaced, opposing ends of the cut so that pulling the pressure sensitive tape produces a pair of substantially parallel extended tears in the film.

Most other easy-opening means disclosed in the art for plastic packaging involve the application of a separate material to the film in one way or another. For example, in U.S. 3,226,009, issued December 28, 1965, a tearing member, such as a strip of plastic, is heat-sealed to a bag made of heat-sealable plastic. In U.S. 3,458,377, issued July 29, 1969, a plastic tear tape is applied to plastic packaging film by extruding a molten filament of plastic and depositing the same upon the film in the form of a long narrow strip. In U.S. 3,515,336, issued June 2, 1970, a strip of a solidified liquid adhesive composition having an inherent adhesive connection to the surface of the package provides opening means for the package. In U.S. 3,535,409, issued October 20, 1970, is disclosed a flexible thermoplastic sheet material having a relatively narrow band of coalesced compatible thermoplastic material extruded therewith, but of different character and extending into or substantially through the thickness of the sheet. In U.S. 3,550,764, issued December 29, 1970, an opening device for flexible packaging is disclosed which comprises a bead integrally formed in synthetic resinous thermoplastic film or sheet material. The bead is made integral with the film as, for example, by forming a bead profile in the film as it is being extruded. U.S. 2,566,752, issued March 2, 1971, discloses a method of continuously cutting a tear strip from a roll of packaging sheet having a surface which is heat or pressure sealable and affixing the tear strip to the surface of the packaging. All of these methods, which entail the application of a separate material to the packaging film to provide a tear strip or guide line are disadvantageous because of their expense.

U.S. 4,384,644, issued May 24, 1983, discloses a roll of coin wrapping material, which may be made of a synthetic resin film or any suitable paper, having streak portions which extend in the width direction of the paper and which are arranged at a predetermined pitch in the longitudinal direction of the paper so that the paper can be readily torn at the streak portions. The streak portions may be made by applying a hardenable printing ink, by forming a portion of the film more thickly than the remaining parts, or by forming a series of perforations. This patent does not relate to opening means for shrinkable plastic films.

## SUMMARY OF THE INVENTION

An opening device for an article wrapped with a shrinkable thermoplastic film has now been found which comprises a tearstrip line imprinted with ink on the surface of the film adjacent to the wrapped article and a cut having spaced opposing ends made through the film and substantially centered over said tearstrip line. The area of film between the opposing ends of the cut form a tab which, when pulled away from the cut in the direction of the tearstrip line, produces an extended tear in the film substantially along the tearstrip line.

## DESCRIPTION OF DRAWINGS

Figure 1 is a perspective view of a shrinkable film showing one embodiment of the opening device of this invention.

Figure 2 is a perspective view of an article wrapped with shrink film showing the opening device of this invention.

## DETAILED DESCRIPTION OF THE INVENTION

The films which can be used in the present invention are any of those comprising one or more synthetic, organic thermoplastic polymers as long as they are orientable. Generally useful polymers are orientable polymers of olefins, e.g., monomers having the formula:

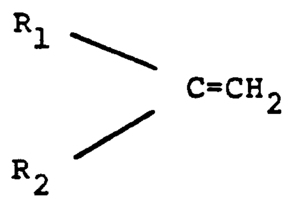

wherein $R_1$ is hydrogen or a halogen and $R_2$ is hydrogen, a halogen, or a hydrocarbon group such as an alkyl group or an aryl group, particularly those having from 1 to 8 carbon atoms, and copolymers thereof with one or more other compounds copolymerizable therewith which contain polymer producing unsaturation such as is present for example in carbon monoxide and in organic compounds containing the ethylene linkage $>C=C<$ e.g., styrene, vinyl stearate, butene, vinyl acetate, vinyl formate, methyl methacrylate, monobutyl maleate, 2-ethyl hexyl acrylate, N-methyl-N-vinyl acetamide, methacrylic acid, ethyl acrylate, acrylic acid, isoprene, butadiene, acrylamide, vinyl triethoxsilane, bicycloheptene, bicycloheptadiene, divinyl phosphonate and the like, as well as other types of polymers including polycarbonates and condensation products of equimolar amounts of dihydric phenols and mono and/or diepoxides, the polyhydroxyethers.

The term "shrinkable" as used herein refers to a property of a film by which it contracts in length and/or width, for example, upon exposure to sufficient heat. Shrinking is generally attributable to a reorientation of molecules which were previously oriented by stretching the film either uniaxially longitudinally (machine direction) or horizontally - (transverse direction) or biaxially (both directions). The amount of shrinkability in the film is not critical. Obviously, the greater the shrinkability of the film the less taut the thermoplastic film must be pulled over the article to be wrapped and the farther from the edges of the article the seals can be. The absence of criticality in these operations effects great cost savings.

According to this invention, a tearstrip line is imprinted on the surface of the shrinkable film which is to be adjacent to the article to be wrapped. Any method suitable for transferring inks to films may be used. A particularly suitable method is flexographic printing. Typically, polyolefin films must be treated by methods well known in the art, e.g. by spark discharge or open flame treatment, before they will accept printing. See, for example, U.S. Patents 3,255,099 and U.S. 3,274,089. Inks which may be used are those which will adhere to the film surface (after the aforementioned treatment, if necessary) and are also well known in the art. The length of the tearstrip line will be determined by the length of the opening needed to remove the film from the wrapped article. The tearstrip line is typically about 1 to 3 mm in width, although any width of line sufficient to provide a tearing guide may be used.

An open-ended cut is made in the film substantially centered over the printed tearstrip line. By open-ended it is meant that the cut has spaced opposing ends, such as a U or V shaped cut. V-shaped cuts have been found to be preferable. The cut may be made by means of a knife or heated bar or by any other means suitable for cutting through the film. When the film is then placed around the article to be wrapped and shrunk by means of exposure to heat, the portion of film between the spaced opposing ends of the cut tends to curl up, making a tab which can be pulled to initiate opening of the wrapped package. The spaced opposing ends of the cut provide an initiated tear so that pulling the curled-up tab along the tearstrip line in the direction of the tearstrip line produces an extended tear in the film.

Referring now to the drawings, which illustrate particular embodiments of this invention, Figure 1 shows film 1 imprinted with tearstrip line 2 and V-shaped cut 3 substantially centered over tearstrip line 2. In Figure 2, article 4 is wrapped with film 5. Tearstrip line 2 is imprinted on the inside surface of film 5, i.e., on the surface of film 5 which is adjacent to article 4. V-shaped cut 3 is centered substantially over tearstrip line 2. Upon shrinkage, the area of film in between the opposing ends of V-shaped cut 3 curls up to form tab 6. When tab 6 is pulled in the direction of the open end of cut 3, an extended tear 7 is produced in the film.

### Example

Samples of Clysar® biaxially oriented polyolefin shrink film (manufactured by E. I. du Pont de Nemours and Company, Wilmington, Delaware) were flexographically imprinted with a tearstrip line about 2.5 mm wide using Flexographic

Ink #4245 supplied by Adolph Gottscho Inc. of Union, New Jersey. A V-shaped hole approximately 15 mm in length and 15 mm in width (one opposing end to the other) was burned into the film, centered substantially over the printed tearstrip line. Several boxes of candy and 1/2 gallons of ice cream were overwrapped with the film, the surface of the film imprinted with the tearstrip line being on the inside of the package, adjacent to the wrapped article. The wrapped articles were then passed through a heat-shrink tunnel. On each wrapped article, a piece of film curled up at the V-shaped hole. When this piece of film or tab, was pulled, a tear either along the entire length of the tearstrip line, or for a distance of at least about 70 mm, was propogated.

For purposes of comparison, the above procedure was repeated except that the film was wrapped around the articles so that the surface of the film imprinted with tearstrip line was on the outside of the package, not adjacent to the wrapped article. When the tab was pulled, the tear did not follow the line for more than about 35 mm before returning to a typical V-tear and ceasing opening. In another comparison, the above procedure was also repeated except that the film was not imprinted with any tearstrip line. When the tab was pulled, a V-tear was formed which stopped within about 25 mm of the V-shaped cut.

## Claims

1. An opening device for an article wrapped in a shrinkable thermoplastic film comprising a tearstrip line imprinted on the surface of said film which is adjacent to said wrapped article and an open-ended cut having spaced opposing ends made through said film and substantially centered over said tearstrip line, the area of film between said opposing ends of said cut forming a tab which, when pulled away from said cut in the direction of said tearstrip line, produces an extended tear in said film substantially along said tearstrip line.

2. An opening device according to Claim 1 wherein the open-ended cut is V-shaped or U-shaped.

3. An opening device according to Claim 2 wherein the open-ended cut is V-shaped.

4. An opening device according to Claim 1, 2 or 3 wherein the shrinkable thermoplastic film is biaxially oriented.

5. An opening device according to any one of Claims 1 to 4 wherein the shrinkable thermoplastic film is a polyolefin film.

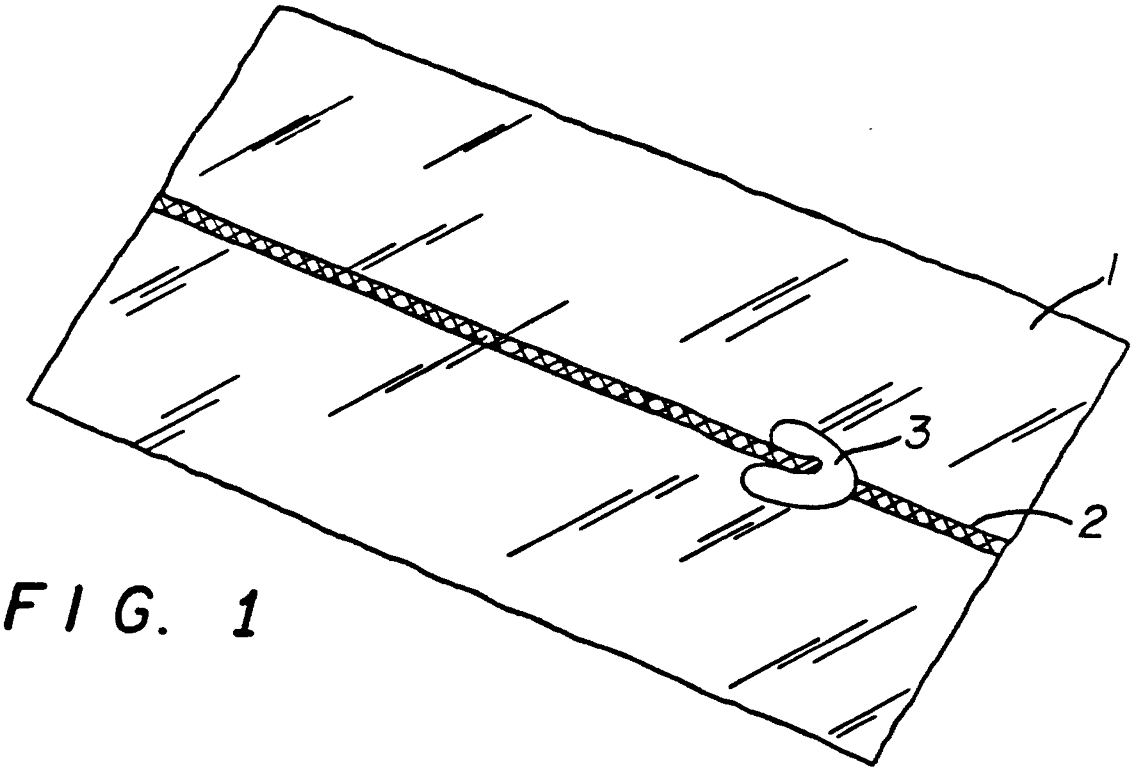


FIG. 1

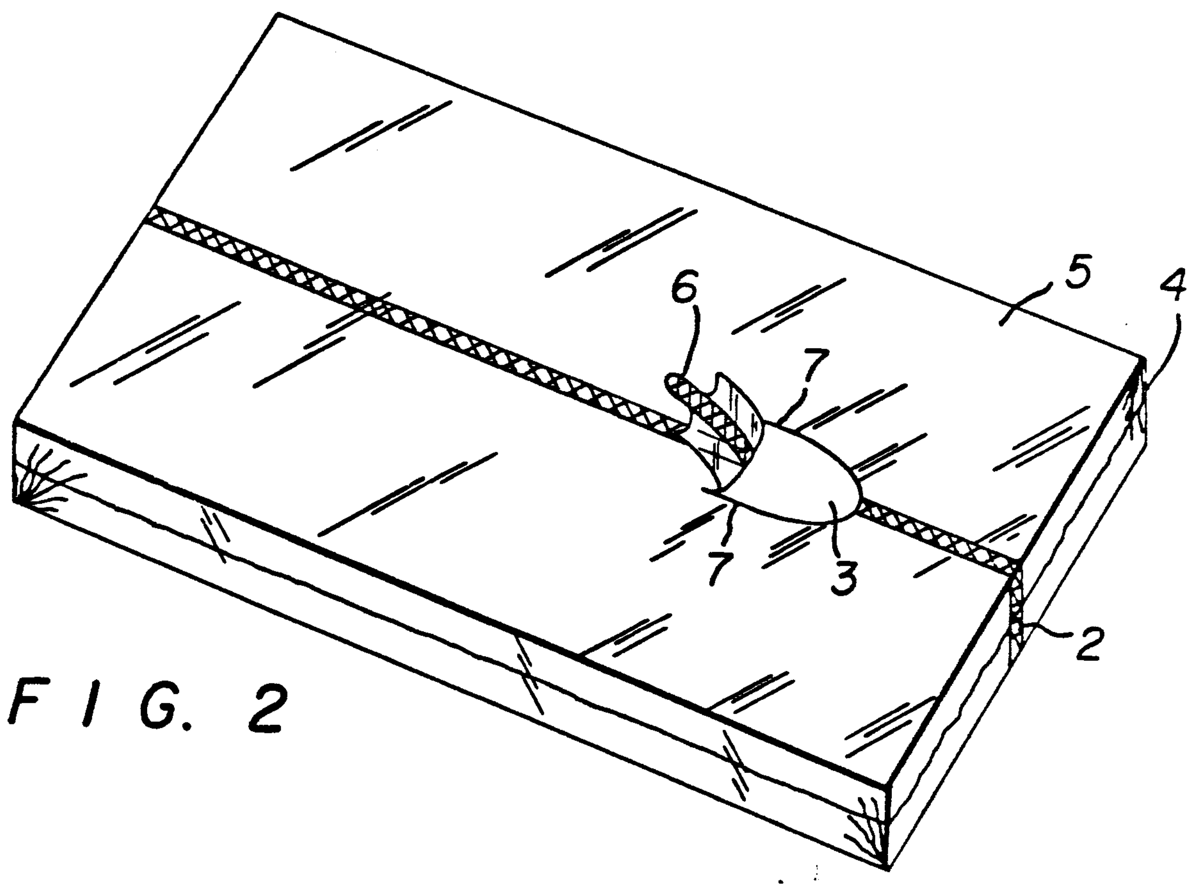


FIG. 2